# EUROPÄISCHE PATENTSCHRIFT

(11) **EP 0 472 775 B1**
(45) Veröffentlichungstag und Bekanntmachung des Hinweises auf die Patenterteilung: **07.02.1996**
(21) Anmeldenummer: 90116789.0
(22) Anmeldetag: 31.08.1990
(51) Int. Cl.: H04Q 3/545

(54) **Programmgesteuerte Kommunikationsanlage bzw. Vermittlungseinrichtung**
Programm-controlled communications system, especially switching exchange
Système de communication avec commande programmée, en particulier central de communication

(43) Veröffentlichungstag der Anmeldung: 04.03.1992
(73) Patentinhaber: SIEMENS AKTIENGESELLSCHAFT, D-80333 München (DE)
(72) Erfinder: Leimkötter, Ulrich, Dipl.-Ing., D-4650 Gelsenkirchen (DE)

(56) Entgegenhaltungen:
- DE-A- 3 827 493
- THE BELL SYSTEM TECHNICAL JOURNAL, Band 62, Nr. 1, Januar 1983, Seiten 303-322, New York, US; M.E: GRZELAKOWSKI et al.: "The 3B20D processor & DMERT operating system"
- NACHRICHTEN TECHNIK ELEKTRONIK, Band 35, Nr. 2, 1985, Seiten 45-47, Berlin, DD; H. KIESER: "Software für eine digitale Vermittlungsanlage mit modularem Aufbau"

## Beschreibung

Die Erfindung betrifft eine programmgesteuerte Kommunikationsanlage bzw. Vermittlungseinrichtung nach dem Oberbegriff des Patentanspruchs 1.

Solche programmgesteuerten Kommunikationsanlagen dienen in Kommunikationssystemen zur Verbindung von Endgeräten untereinander und zur Verbindung dieser Endgeräte mit Kommunikationsnetzen, insbesondere öffentlichen Netzen.

Die Vielfalt bekannter Kommunikationssysteme reicht von einfachen Telefonsystemen für die ausschließliche Übertragung von Sprache bis hin zu voll ausgebauten ISDN-Kommunikationssystemen mit einer simultanen Mehrfach- oder Mischkommunikation von Sprache, Text, Bild und Daten.

An die Kommunikationsanlage in einem Kommunikationssystem sind je nach Komplexitätsgrad des zugrundeliegenden Kommunikationssystems Endgeräte mit vielfältigen Leistungsmerkmalen anschließbar, so zum Beispiel analoge und digitale Telefone, Fernkopierer, Teletext- und Bildschirmtextstationen, Personalcomputer, Datenterminals usw.

Unabhängig vom Komplexitätsgrad des zugrundeliegenden Kommunikationssystems besteht eine Kommunikationsanlage im Prinzip aus einer Vielzahl vermittlungstechnischer Funktionseinheiten und einem programmierbaren digitalen Rechensystem, das diese Funktionseinheiten steuert und alle vermittlungstechnischen Abläufe überwacht.

Dazu ist es unumgänglich, daß das Rechensystem ständig mit Informationen über den Betriebszustand der Funktionseinheiten und über jegliche Zustandsänderungen, insbesondere Eingaben an den angeschlossen Endgeräten informiert wird, um bei Bedarf umgehend entsprechende Steueranweisungen und Meldungen zu erstellen und ausgeben zu können.

Im Regelfall treffen beim Rechensystem innerhalb kurzer Zeit eine Vielzahl von Informationen ein, die aufgrund der begrenzten Leistungsfähigkeit des Rechensystems nicht sofort bei ihrem Eintreffen bearbeitet werden können. Die eingetroffenen Informationen, wegen ihrer (das Rechensystem) anregenden Wirkung auch Anreize genannt, werden in einer Art Warteschlange eingereiht, aus der sie das Rechensystem nacheinander zur Bearbeitung entnimmt. Da die eingetroffenen Anreize jedoch unterschiedliche Wertigkeiten aufweisen, d.h. die Bearbeitung der Anreize unterschiedlich dringlich ist, hat sich eine sukzessive Bearbeitung der Anreize nach der Reihenfolge ihres Eintreffens als nicht geeignet erwiesen.

Für die Festlegung der Reihenfolge der Bearbeitung wird deshalb die Wertigkeit der eingetroffenen Anreize herangezogen. Dazu wird im Rechensystem von vornherein jedem eintreffenden Anreiz eine jeweilige Wertigkeit in Form eines Prioritätswertes zugeordnet. Von den in der Warteschlange eingereihten Anreizen wird zur Bearbeitung stets der jeweils höchstpriore Anreiz, der anhand der zugeordneten Prioritätswerte ermittelt wird, entnommen.

Da auch die von einem jeweiligen Endgerät zur Kommunikationsanlage übermittelbaren Anreize unterschiedliche Prioritätswerte aufweisen, kann es vorkommen, daß ein Benutzer an seinem Endgerät wiederholt Eingaben macht, die das betreffende Endgerät über eine längere Zeitdauer hinweg zur aufeinanderfolgenden Abgabe von Anreizen mit hoher Priorität veranlassen. In einem solchen Fall wird der Benutzer eines anderen Endgerätes, das zur Abgabe eines einzigen Anreizes mit niedriger Priorität veranlaßt wurde, über eine - unzumutbar - lange Zeitdauer keine Reaktion auf seine Eingabe erhalten.

Aus der DE-38 27 493 A1 ist ein Verfahren und eine Anordnung zur Realisierung von Datenverbindungen in einer Kommunikationsanlage bekannt. Die Kommunikationsanlage weist eine zentrale Systemprozessorsteuerung auf, deren Multitasking-Betriebssystem eine Leitungstechnik-Task mit endgeräteartenspezifischen Gerateprogrammodulen und eine vermittlungstechnikTask mit endgeräteklassenunabhängigen und kommunikationsdiensteunabhängigen vermittlungsprozedur-Programmodulen verwaltet.

Aus "The Bell System Techical Journal", Band 62, Nr. 1, Januar 1983, Seiten 303-322, New York, US; M.E: Grzelakowski et al.: "The 3B20D processor & DMERT operating system" ist ein Echtzeitbetriebssystem bekannt, das Interprozeßkommunikation sowie Speichermanagement und Taskzuteilung unterstützt. Außerdem weist dieses Betriebssystem Prozesse auf, die eine Kommunikation mit peripheren Einrichtungen und dem Dateisystem steuern.

Der Erfindung liegt die Aufgabe zugrunde, eine programmgesteuerte Kommunikationsanlage anzugeben, bei der erhöhte Aktivitäten an einem oder mehreren an die Kommunikationsanlage angeschlossenen Endgeräten nicht dazu führen, daß die Reaktionszeiten bei den anderen Endgeräten bestimmte Toleranzgrenzen überschreiten.

Gelöst wird die Aufgabe ausgehend von einer Kommunikationsanlage gemäß den Merkmalen des Oberbegriffs des Patentanspruchs 1 durch die im kennzeichnenden Teil des Patentanspruchs 1 angegebenen Merkmale.

Um die Funktionen und die Wirkungsweise der im kennzeichnenden Teil des Patentanspruchs 1 angegebenen Merkmale besser verständlich machen zu können, erscheint es erforderlich zunächst noch einmal auf den Stand der Technik näher einzugehen.

Um den speziellen Steuerungsaufgaben in einer Kommunikationsanlage gerecht werden zu können, ist das digitale Rechensystem mit einem Multitasking-Betriebssystem versehen, das die für eine Kommunikationsanlage typische Vielzahl von quasi gleichzeitig anfallenden und auch zu erledigenden Einzelaufgaben koordiniert. Da bei einer Kommunikationsanlage häufig hohe Reaktionsgeschwindigkeiten erforderlich sind, wird als Betriebssystem ein sogenanntes Echtzeitbetriebssystem vorgesehen. Die wesentliche Aufgabe dieses Betriebssystems besteht darin, in Abhängigkeit von eingetroffenen oder im Rechensystem intern gebildeten Anreize, dem Systemprozessor, der die eigentlich ausführende Einheit des digitalen Rechensystemes ist, entsprechende, für eine Reaktion auf die betreffenden Anreize vorgesehene Verarbeitungsvorschriften zuzuweisen.

Solche Anreize, die z. B. die Form von 8 Bit-Wörtern haben können, werden u. a. von den an die Kommunikationsanlage angeschlossenen Endgeräten abgeben, wenn eine Bedienerperson an einem Endgerät Funktionen (z. B. die Uhrzeitanzeige) auslöst. Bei jeder ausgelösten Funktion gibt das Endgerät einen Anreiz an die Kommunikationsanlage ab, wobei den Funktionen unterschiedliche Anreize z. B. in Form verschiedener Binarkombinationen des 8 BitWortes zugeordnet sind.

Jeder Anreiz wird in der Kommunikationsanlage als Erfordernis angesehen, eine dem Anreiz individuelle Verarbeitungsvorschrift dem Systemprozessor zuzuweisen. Für jeden möglichen Anreiz steht deshalb im digitalen Rechensystem eine anreizindividuelle Verarbeitungsvorschrift zur Verfügung, die als jeweiliges Programmodul im Systemspeicher des Rechensystems hinterlegt ist. Da jedes Programmodul gewissermaßen zur Realisierung einer bestimmten Aufgabe dient, wird es bei Abarbeitung durch den Systemprozessor als 'Task' bezeichnet.

Aufgrund der Tatsache, daß jede Abarbeitung eines Programmodules durch einen ensprechenden Anreiz angeregt werden muß, wird dem Betriebssystem ein ereignisgesteuertes Verhalten zugesprochen. Neben den bereits erwähnten, von den angeschlossenen Endgeräten übermittelten Anreizen, werden auch in den verschiedenen vermittlungstechnischen Einheiten wie z. B. in den Leitungsheinheiten, im Koppelnetz etc., also innerhalb der Kommunikationsanlage Anreize erzeugt. Außerdem kann jede 'Task' von sich aus Anreize, sogenannte interne Anreize abgeben, mit denen wiederum die Abarbeitung eines anderen Programmodules angeregt werden kann.

Bei den von außerhalb des digitalen Rechensystems eingetroffenen Anreizen sind zwei Anreiztypen zu unterscheiden. Zum einen die direkten Anreize, die von sich aus das Betriebsystem zur Kenntnisnahme zwingen, und zum anderen die indirekten Anreize, die in einen Meldespeicher gelangen, der vom digitalen Rechensystem in gewissen Intervallen, z. B. alle 60 Millisekunden, ausgelesen wird.

Zu welchem Typ ein eingetroffener Anreiz zählt, hängt natürlich im wesentlichen davon ab, welche Bedeutung er hat, insbesondere ob und wie zeitkritisch seine Bearbeitung für die Gesamtfunktion der Kommunikationsanlage ist. Grundsätzlich können die Anreize bzw. die von den Anreizen bezeichneten Programmodule ("Tasken") im digitalen Rechensystem einer Kommunikationsanlage hinsichtlich ihre Bedeutung in drei verschiedene Kategorien eingeteilt werden.

Zur ersten Kategorie gehören all diejenigen "Tasken", für deren Bearbeitung eng bemessene zeitliche Vorgaben bestehen, die in jedem Falle erfüllt werden müssen. Solche Zeitvorgaben ergeben sich z. B. durch die Vorschriften der nationalen Postbehörden bei der Wahlaufnahme oder der Zeichengebung.

Zur zweiten Kategorie zählen diejenigen Anreize bzw. "Tasken", deren Bearbeitung zeitverteilbar ist, deren Bearbeitung also mehrfach unterbrochen werden darf, da für sie ein etwas größerer zeitlicher Spielraum zu Verfügung steht. Wesentlich dabei ist, daß dieser zeitliche Spielraum für alle zeitverteilbaren Anreize bzw. "Tasken" unabhängig von deren Herkunft derselbe sein sollte. Eine sofortige Bearbeitung solcher Anreize ist nicht zwingend erforderlich, ein Überschreiten des Spielraumes muß aber vermieden werden.

Als zeitverteilbar sina im wesentlichen die bei der Signalisierung zwischen den Endgeräten vorgesehenen Anreize bzw. "Tasken" anzusehen. Einerseits hat nämlich der Benutzer eines bestimmten Endgerätes in der Regel keinen nennenswerten Vorteil, wenn seine Eingabe mit höchster Dringlichkeit, also binnen Bruchteilen einer Sekunde bearbeitet wird, andererseits müßten andere Benutzer aber dafür erhebliche Wartezeiten bei den Reaktionen auf ihre Eingaben inkaufnehmen.

Die dritte Kategorie bilden die zeitunkritischen Anreize bzw. "Tasken", deren Bearbeitung zwar notwendig ist, aber keinen Zeitvorgaben unterliegt. Zu den "Tasken" dieser Kategorie zählen z. B. die Programmodule für Prüf- und Verwaltungsaufgaben, deren Ergebnisse relativ selten benötigt werden.

Um dem Betriebssystem bei dem Vorliegen einer Vielzahl eingetroffener Anreize eine Entscheidungshilfe zu geben, welcher der Anreize sofort bearbeitet werden sollte und welche Anreize noch Zeit für die Bearbeitung haben, ist jedem möglichen Anreiz bzw. dem durch den Anreiz bezeichneten Programmodul eindeutig ein Prioritätswert zugeordnet. Selbstverständlich haben die zur ersten Kategorie zählenden Anreize bzw. Programmodule jeweils einen eine höhere Priorität ausdrückenden Prioritätswert, als die zur zweiten und dritten Kategorie gehörenden. Die Anreize bzw. Programmodule der zweiten Kategorie haben dementsprechend jeweils einen eine höhere Priorität repräsentierenden Prioritätswert als die der dritten Kategorie.

Zur Bewältigung der an das Betriebssystem gestellten Koordinations- und Verwaltungsaufgaben sind im Betriebsystem mehrere Teilsysteme, sogenannte Subsysteme vorgesehen, von denen eines als Kommunikationssubsystem bezeichnet wird. Dieses Kommunikationssubsystem trägt jeden intern ausgelösten Anreiz und jeden eingetroffenen Anreiz der ersten und dritten Kategorie sofort in eine Prozeßliste ein, die eine Art Warteliste für die ablaufbereiten Programmodule darstellt.

Ein weiteres Teilsystem des Betriebssystems, das sogenannte Zuteilungssubsystem, ermittelt aus den in der Prozeßliste vermerkten Anreizen jeweils denjenigen Anreiz mit der höchsten Priorität und weist dann das von diesem Anreiz bezeichnete Programmodul dem Systemprozessor zur Ausführung zu.

Ein momentan dem Systemprozessor zugewiesenes Programmodul bleibt solange dem Systemprozessor zugewiesen, bis entweder das Programmodul gänzlich abgearbeitet ist oder bis das Zuteilungssubsystem in der Prozeßliste einen, gegenüber dem das momentan laufende Programmodul bezeichnenden Anreiz höherprioren Anreiz ermittelt. Im letzteren Fall wird die Abarbeitung des momentan laufenden Programmoduls vorübergehend unterbrochen, wobei das Programmodul in der Prozeßliste als ablaufbereit vermerkt bleibt. Das Zuteilungssubsystem weist das neu ermittelte Programmodul dem Systemprozessor zur Ausführung zu.

Auf der Grundlage der vorstehend erläuterten Zusammenhänge wird im folgenden auf die im kennzeichnenden Teil des Patentanspruchs 1 angegebenen Merkmale der Erfindung näher eingegangen.

Bei eingetroffenen Anreizen der zweiten Kategorie vermerkt das Kommunikationssubsystem in der Prozeßliste ein Anreizsicherungsprogrammodul als ablaufbereit. Aufgrund seines zugeordneten Prioritätwertes gehört dieses Anreizsicherungsprogrammodul entweder dem unteren Bereich der ersten Kategorie oder dem oberen Bereich der zweiten Kategorie an.

Das Anreizsicherungsprogrammodul hat die Aufgabe, den eingetroffenen direkten Anreiz oder die eingetroffenen indirekten Anreize je nach Herkunft der Anreize in den sendenden Endgeräten individuell zugeordneten Anreizspeichern zu vermerken. Die Anreizspeicher stellen lediglich individuelle Wartelisten dar, die nach dem "FIFO-Prinzip" (first in first out) organisiert sind, d. h. daß neue Einträge immer an das Ende der Warteliste angefügt werden und bei einer Entnahme der am Anfang der Warteliste stehende Eintrag entfernt wird.

Bevor das Anreizsicherungsprogrammodul gänzlich abgearbeitet ist löst es einen, ein Arbitrierungsprogrammodul bezeichnenden internen Anreiz aus, sofern in der Prozeßliste noch kein das Arbitrierungsprogrammodul bezeichnender Anreiz vermerkt ist. Das Arbitrierungsprogrammodul gehört zur zweiten Kategorie von "Tasken". Sein Prioritätswert liegt am unteren Ende der zweiten Kategorie, also an der Grenze zur dritten Kategorie.

Wie bereits erwähnt wird ein interner Anreiz bzw. das von diesem bezeichnete Programmodul vom Kommunikationssubsystem in der Prozeßliste vermerkt. Das Arbitrierungsprogrammodul, das nur dann vom Systemprozessor abgearbeitet werden kann, wenn kein höherpriores Programmodul in der Prozeßliste vermerkt ist, hat die Aufgabe, nacheinander die den Endgeräten individuell zugeordneten Anreizspeicher abzusuchen und jedesmal bei Auffinden eines wenigstens einen Anreiz enthaltenden Anreizspeichers aus diesem einen Anreiz zu entnehmen und anschließend einen diesem entnommenen Anreiz entsprechenden und gleichwirkenden d. h. dasselbe Programmodul bezeichnenden internen Anreiz auszulösen. Da die in den Anreizspeichern enthaltenen Anreize von den Endgeräten stammen, gehören sie der zweiten Kategorie an und liegen mit ihren Prioritätswerten zwischen dem Prioritätswert des Anreizsicherungsprogrammoduls und dem des Arbitrierungsprogrammmoduls.

Der wesentliche Vorteil einer erfindungsgemäß realisierten Kommunikationsanlage liegt in der gleichmäßigen Verteilung der für zeitverteilbare Aufgaben zur Verfügung stehenden Verarbeitungsleistung auf die angeschlossenen Endgeräte. Aufgrund der vorstehend erläuterten Prioritätsstrukturen kann stets nur eine 'Task' der zweiten Kategorie in der Prozeßliste als ablaufbereit vermerkt werden. Das Arbitrierungsprogrammodul kann nämlich nur dann ablaufen, wenn keine 'Task' der zweiten Kategorie in der Prozeßliste als ablaufbereit vermerkt ist. Sobald das Arbitrierungsprogrammodul einen internen Anreiz für ein Programmodul der zweiten Kategorie auslöst, wird der Ablauf des Arbitrierungsprogrammoduls beendet, da dann ein gegenüber dem Arbitrierungsprogrammodul höherpriorisiertes Programmodul in der Prozeßliste als ablaufbereit vermerkt wird.

Sobald also die Bearbeitung eines von einem Endgerät eingetroffenen Anreizes begonnen wurde, kann sie durch eingetroffene Anreize von anderen Endgeräten nicht mehr unterbrochen werden. Der momentan bearbeitete Anreiz bzw. das von diesem bezeichnete Programmmodul wird also gänzlich abgearbeitet, bevor wieder ein von einem Endgerät eingetroffener Anreiz bearbeitet werden kann, wobei dieser Anreiz dann in der Regel von einem anderen, durch die Reihenfolge der Anreizspeicherabfrage bestimmten Endgerät stammt.

Bei der erfindungsgemäß ausgebildeten Kommunikationsanlage läßt sich die Verarbeitungsleistung des Rechensystems, die für einen tadellosen Betrieb der Kommunikationsanlage zur Verfügung stehen muß äußerst gering halten, da die Verarbeitungsleistung, nicht - wie bei bestehenden Kommunikationsanlagen - so hoch dimensioniert sein muß, daß auch bei etwaigen extremen Aktivitäten an einem Endgerät, die anderen Endgeräte nicht völlig ausfallen.

Ein geringerer Bedarf an Verarbeitungsleistung hat in der Regel weniger und kostengünstigere Bauteile zur Folge, weshalb sich die erfindungsgemäß ausgebildete Kommunikationsanlage insbesondere für die Realisierung kleinerer und mittlerer Kommunikationssysteme eignet.

Vorteilhafte Weiterbildungen der Erfindung sind in den Unteransprüchen angegeben.

Werden bei der Bearbeitung eines eingetroffenen Anreizes Informationen gebildet, die von der Kommunikationsanlage an ein oder mehrere Endgeräte gesendet werden sollen, wie z. B. eine alphanumerische Information, die als Folge von 8 Bit-Worten dem Endgerät zugeleitet wird und die auf dem Zeilendisplay eines komfortablen Telefongerätes zur Anzeige kommen soll, so werden diese Informationen zunächst in einem, dem als Empfänger vorgesehenen Endgerät individuell zugeordneten Informationsausgabespeicher vermerkt.

Erst bei Abarbeitung des Anreizsicherungsprogrammoduls werden aus den individuell zugeordneten Informationsausgabespeichern die dort hinterlegten Informationen entnommen und an die betreffenden Endgeräte weitergeleitet.

Der sich dabei ergebende Vorteil wird bei langsamen Übertragungsstrecken zu den Endgeräten deutlich. Durch die Zwischenspeicherung in den Informationsausgabespeichern kann die Abarbeitung des die Information bildenden Programmodules ungehemmt abgeschlossen werden. Wartezeiten aufgrund geringer Übertrageschwindigkeiten auf den Übertragungsstrecken zu den Endgeräten werden vermieden.

Auch das Anreizsicherungsprogrammodul ist nicht gezwungen, solange zu worten, bis die gesamte, für ein jeweiliges Endgerät vorgesehene Information übertragen worden ist. Sobald das Anreizsicherungsprogrammodul abgearbeitet wird, entnimmt es aus jedem Informationsausgabespeicher, in dem eine Information vermerkt ist, genau eine Teilinformation, z. B. ein 8 Bit-Wort, und veranlaßt die Übertragung auf der zugehörigen Übertragungsstrekke. Die Übertragungszeit von Informationen an die Endgeräte läßt sich dadurch optimieren, daß das Anreizsicherungsprogrammodul in regelmäßigen Zeitabständen abgearbeitet wird, die so bemessen sind, daß einerseits mit den Zeitabständen zwischen zwei Teilinformationen auf derselben Übertragungsstrecke die maximal mögliche Übertragungsgeschwindigkeit dieser Übertragungsstrecke erreicht wird, und andererseits das Anreizsicherungsprogrammodul keine Wartephasen für eine Synchronisierung berücksichtigen muß.

Der Abarbeitung des Anreizsicherungsprogrammodules in diesem Sinne dient ein periodisch eintreffender Anreiz in Form eines Zeittaktes, dessen Periodendauer entsprechend bemessen ist.

Ein wesentlicher Vorteil ergibt sich weiterhin, wenn die Anreizund Informationsausgabespeicher jeweils als Ringspeicher ausgebildet sind; ein Ringspeicher wird durch eine Anzahl n adreßmäßig aufeinanderfolgender Speicherzellen gebildet, deren Adressierung modulo n erfolgt. Sowohl in den Anreiz- wie auch in den Informationsausgabespeichern lassen sich damit Anreize bzw. Ausgabeinformationen ohne Zerstörung der jeweils vorhergegangenen fortlaufend hintereinander eintragen und es können durch Vergleich mit vorhergegangenen Einträgen sowohl bei der Anreizsicherung Fehlanreize aussortiert werden als auch bei der Informationsausgabe sinnlos gewordene Informationen unterdrückt werden.

Um sicherstellen zu können, daß eine Information, die bereits teilweise beim Endgerät angekommen ist, auch vollständig an das Endgerät gelangt, z. B, am Display angezeigt wird, bzw. nicht sofort durch eine neue Information überschrieben wird, ist eine verfahrenstechnische Rückkopplung mit dem Informationsausgabespeicher vorgesehen, so daß ein Endgerät erst dann wieder mit einer neuen Ausgabeinformation z. B. einem Displayinhalt versorgt wird, wenn eine vorhergehende Ausgabe vollständig abgeschlossen ist. Dazu muß jedes Programmodul, das eine Information in einem Informationsausgabespeicher hinterlegen möchte, zuerst sicherstellen, daß der betreffende Informationsausgabespeicher keine auszugebenden Teilinformationen mehr enthält, also leer ist.

Anhand der Zeichnung soll im folgenden ein Ausführungsbeispiel der Erfindung erläutert werden.

Dabei zeigen
- Figur 1: eine schematische Blockdarstellung einer Kommunikationsanlage im Zusammenhang mit Endgeräten,
- Figur 2: ein Blockschaltbild mit den Komponenten in der zentralen Steuerung,
- Figur 3: eine schematische Darstellung zur Veranschaulichung der Zuweisung von Programmodulen über eine Prozeßliste,
- Figur 4: eine vereinfachende graphische Darstellung zur Veranschaulichung der Zustandsübergänge in einem Multitasking-Betriebssystem,
- Figur 5: eine schematische Blockdarstellung zur Veranschaulichung der Prioritätsstruktur der Programmodule,
- Figuren 6 a, b, c, d,: schematische Blockdarstellungen in vier Phasen zur Verdeutlichung der betriebssystemrelevanten Zusammenhänge bei der Abarbeitung eines Anreizes,
- Figur 7: ein Ablaufdiagramm zur Veranschaulichung der wesentlichen programmtechnischen Schritte im Betriebssystem,
- Figur 8: ein Ablaufdiagramm zur Veranschaulichung der wesentlichen programmtechnischen Schritte im Anreizsicherungsprogrammmodul,
- Figur 9: ein Ablaufprogramm zur Veranschaulichung der wesentlichen programmtechnischen Schritte im Arbitrierungsprogrammodul.

Im 'Anhang' ist ein in der Programmiersprache 'C' erstelltes Programmlisting für die Anreizsicherungs- und Arbitrierungsprogrammodule angegeben.

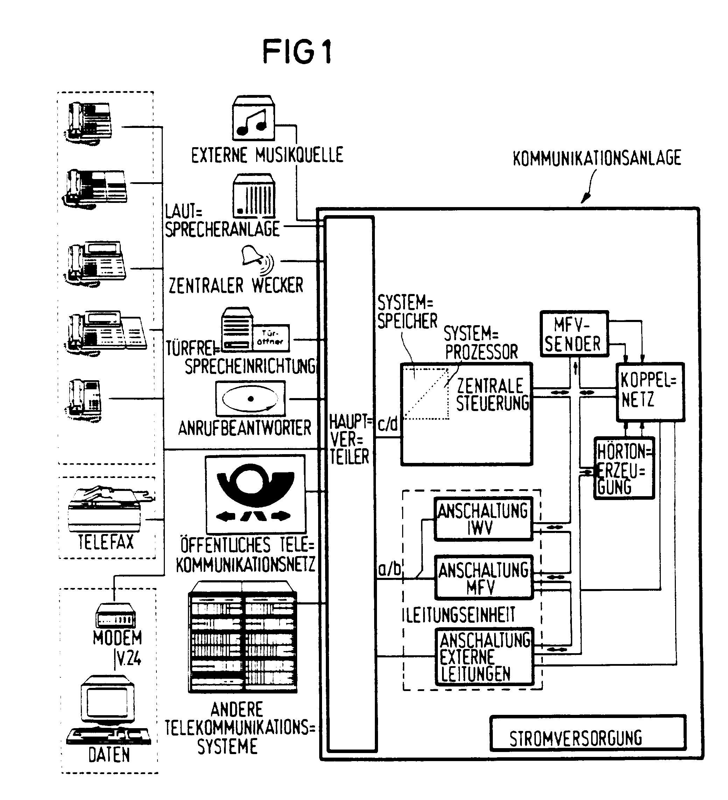

In Figur 1 ist eine Kommunikationsanlage für ein Kommunikationssystem mittleren Komplexitätsgrades schematisch dargestellt. An die Kommunikationsanlage sind eine Vielzahl von Telefonendgeräten anschließbar, wobei in der Figur nur einige zur Symbolisierung unterschiedlicher Ausführungsformen angedeutet sind.

Weiterhin sind Telefaxgeräte und über Modems Datensicht- und Verarbeitungsgeräte anschließbar. Die Kommunikationsanlage kann mit dem öffentlichen Telekommunikatonsnetz oder auch mit anderen Telekommunikationssystemen verbunden sein. Auch Sondereinrichtungen wie Anrufbeantworter, Türsprecheinrichtungen etc. können an die Kommunikationsanlage angeschlossen werden.

Die Kommunikationsanlage selbst besteht im Prinzip aus einzelnen, untereinander verbundenen modularen Einheiten. Als wesentlich zu erwähnen sind der Hauptverteiler als Schnittstelleneinrichtung zu den angeschlossenen Endgeräten und Netzen und eine Leitungseinheit mit unterschiedlichen Anschaltungsbaugruppen, die die unterschiedlichen Signalisierungsinformationen von den Endgeräten oder Netzen auf ein innerhalb der Kommunikationsanlage einheitlich verwendetes Format umwandeln.

Eine weitere wesentliche Einheit bildet das Koppelnetz, das die Sprechverbindungen zwischen den Endgeräten untereinander oder zwischen den Endgeräten und angeschlossenen Telekommunikationsnetzen durchschaltet. Das Koppelnetz besteht aus mehreren sogenannten Koppelvielfachen in Form von matrixartig angeordneten Zeilen- und Spaltenleitungen, wobei die Matrixpunkte als ein und ausschaltbare Verbindungselemente ausgebildet sind.

Des weiteren ist ein Hörtonerzeugungsmodul und ein MFV-Sendermodul (MFV = Mehrfrequenzwahlverfahren, IWV = Impulswahlverfahren) vorhanden, wobei das Hörtonerzeugungsmodul zwei Hörtöne unterschiedlicher Frequenz generiert und das MFV-Sendermodul für die Wahl auf externen Leitungen nach dem Mehrfrequenzverfahren die Frequenzen erzeugt. Sämtliche modularen Einheiten sind mit einer zentralen Steuerung verbunden. Diese zentrale Steuerung besteht aus einem digitalen Rechensystem das die Funktion der einzelnen Einheiten überwacht, diese zur Ausführung ihrer spezifischen Funktion anregt und von diesen Daten entgegennimmt.

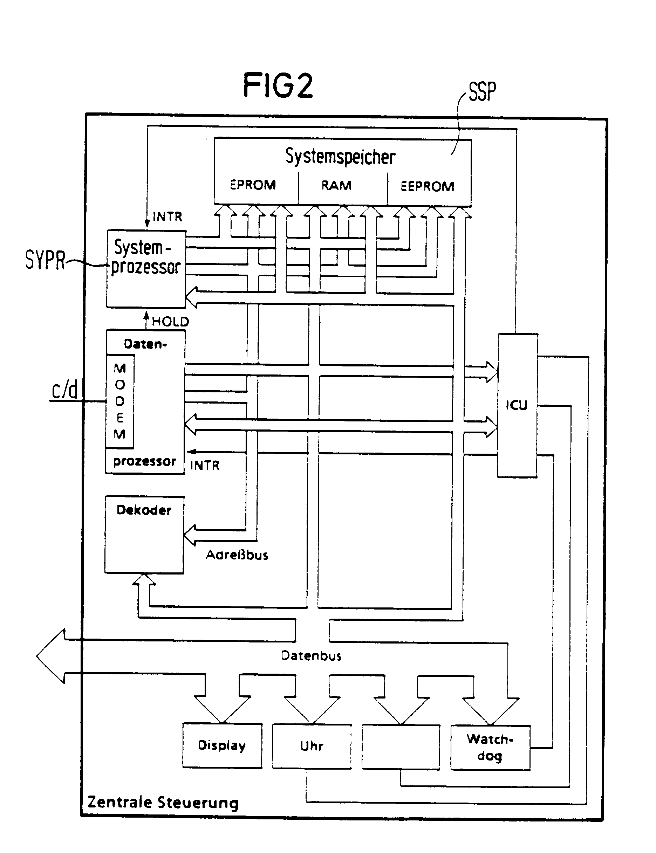

In Figur 2 sind anhand eines Blockschaltbildes die Komponenten der zentralen Steuerung dargestellt. Ein Systemprozessor, z. B. ein Mikroprozessor vom Typ SAB 8088, ist über einen Adressbus, einen Datenbus und einen Steuerbus mit einem Systemspeicher verbunden. Dieser Systemspeicher besteht aus Halbleiterspeicherbausteinen unterschiedlichen Speichertyps; einem EPROM-Speicher in dem das gesamte Systemprogramm unabänderbar hinterlegt ist; einem RAM-Speicher, der als Schreib-Lese-Arbeitsspeicher dient und dessen Daten bei Spannungsausfall verloren sind; und einem EEPROM-Speicher in dem Bedienerdaten z. B. Kurzrufnummern hinterlegt sind. Bei Spannungsausfall verliert dieser Speichertyp seine Information nicht.

Ebenfalls auf den Systemspeicher zugreifen kann ein Datenprozessor der im wesentlichen die C/D-Ader Signalisierung übernimmt und in seiner Grundfunktion einem Modem entspricht. Weiterhin enthält die zentrale Steuerung Decodereinrichtungen zum Auswählen von einzelnen Adressen aus dem Adressbus und mehrere Überwachungseinheiten wie z. B. ein Display, eine Uhr und ein Watchdogtimer. Eine Interruptsteuereinheit ICU steuert die Interruptanforderungen und gibt Interrupts an den Systemprozessor und den Datenprozessor. Über den Datenbus ist die zentrale Steuerung mit den anderen, in Verbindung mit Figur 1 beschriebenen vermittlungstechnischen Einheiten der Kommunikationsanlage verbunden.

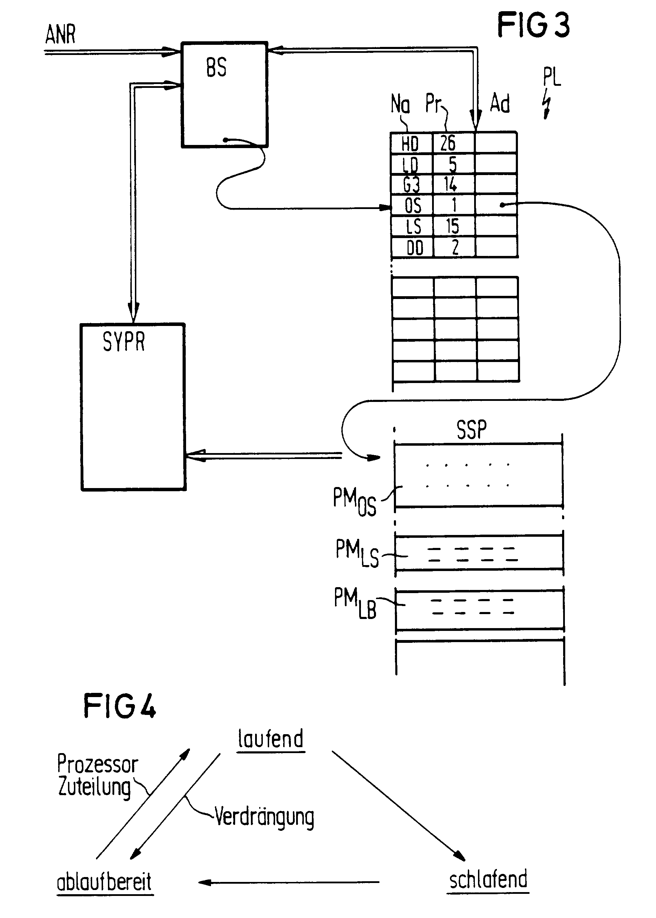

Die Figur 3 zeigt anhand schematischer Funktionsblöcke das Zusammenwirken der Prozeßliste PL und der Programmodule PM in einem Multitasking-Betriebssystem BS mit einem Systemprozessor SYPR.

Vom Prinzip her gesehen, dient der Systemprozessor SYPR ausschließlich zur Bearbeitung des als Betriebssystem BS bezeichneten Programmes. Dieses Betriebssystemprogramm ist jedoch so ausgelegt, daß es in Abhängigkeit von eintreffenden Informationen, die als Anreize ANR bezeichnet werden als auch durch interne Zustände bedingt, nacheinander jeweils einen der ihm zur Verfügung stehenden Programmodule PM auswählt und für eine gewisse Zeitdauer dem Systemprozessor SYPR zur Ausführung zuteilt. Jedes Programmodul PM ist als Programmcodesequenz im Systemspeicher SSP hinterlegt und hat einen Namen NA, z. B. eine Buchstabenkombination, sowie einen Prioritätswert PR.

Dem Betriebssystem BS steht eine Prozeßliste PL zur Verfügung, in der es die ablaufbereiten Programmodule z. B. durch Eintragung des Namens NA, des Prioritätswertes PR und der Adresse AD des Programmodules PM im Systemspeicher SSP vermerkt, und aus der dann das jeweils höchstpriorisierte Programmodul PM für eine Zuweisung an Systemprozessor SYPR ermittelt wird.

Wird einem Programmodul PM der Systemprozessor SYPR zugeteilt, kann das betreffende Programmodul PM den Systemprozessor SYPR solange behalten, bis sich entweder ein höherpriorisiertes Programmodul um Zuteilung des Systemprozessors SYPR bewirbt, oder bis es von sich aus den Systemprozessor SYPR abgibt. Letzteres trifft vor allem auch dann zu, wenn ein Programmodul PM zur Bearbeitung seiner Aufgaben gewisse von anderen Programmodulen zur erbringende Informationen benötigt und auf das Eintreffen dieser Informationen worten muß.

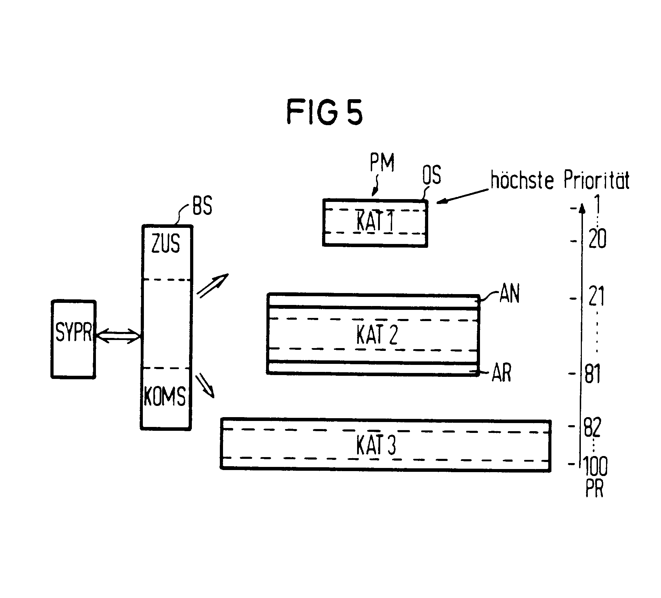

Wie der in Figur 4 dargestellte Zustandsgraph zeigt, befindet sich jedes Programmodul PM des Multitasking-Betriebssystem BS zu einem beliebigen Zeitpunkt in genau einem von im wesentlichen drei Zuständen, die als laufend, ablaufbereit und schlafend bezeichnet werden. Laufend ist demnach dasjenige Programmmodul, dem im Moment der Systemprozessor zugeteilt ist. Ablaufbereit sind alle Programmodule, die sich um Zuteilung des Systemprozessors bewerben d. h. in der Prozeßliste vermerkt sind, und als schlafend werden die Programmodule bezeichnet, die auf das Eintreffen bestimmter Anreize oder Meldungen warten.

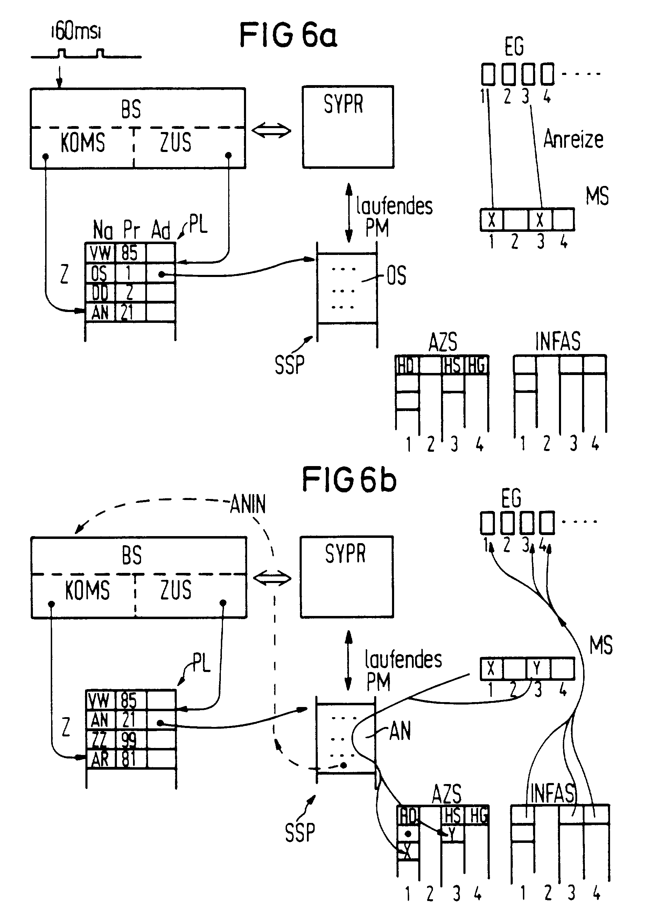

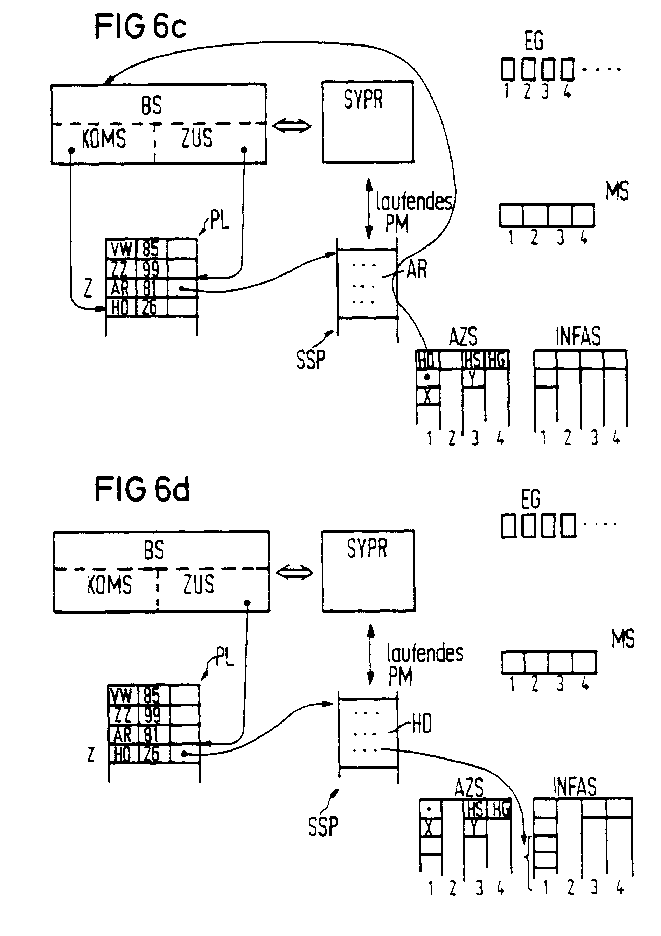

Derjenige Programmteil, der im Betriebssystem BS für die Auswahl und Zuteilung eines Programmodules für den Systemprozessor zuständig ist, wird Zuteilungssubsystem ZUS genannt oder als "Task-Scheduler" bezeichnet. Ein weiteres wesentliches Programmteil des Multitasking-Betriebssystems ist, wie in Figuren 5 und 6 angedeutet das Kommunikationssubsystem KOMS.

Die Auswahl des nächsten, dem Systemprozessor SYPR zuzuteilenden Programmodules PM erfolgt mit Hilfe der bereits erwähnten Prozeßliste PL, in der das Kommunikationssubsystem KOMS ablaufbereite Programmodule PM durch Eintragung wenigstens ihres Namens NA vermerkt. In der Regel geschieht dies bei Eintreffen eines Anreizes ANR, der die Bearbeitung eines betreffenden Programmodules veranlaßt.

Das Kommunikationssubsystem KOMS dient weiterhin dazu, um aus dem momentan laufenden Programmodul Aufträge, also interne Anreize an andere Programmodule geben zu können, die dann vom Kommunikationssubsystem KOMS in der Prozeßliste PL als ablaufbereit vermerkt werden.

In Figur 5 sind in schematischer Darstellung das Betriebssystem und die im Systemspeicher vorhandenen Programmodule ihrer zugeordneten Priorität nach dargestellt. Das Multitasking-Betriebssystem BS mit seinem Zuteilungssubsystem ZUS und seinem Kommunikationssubsystem KOMS teilt zu jedem Zeitpunkt dem Systemprozessor SYPR eines der Proprammodule PM zu. Wie bereits erwähnt ist jedem Programmodul ein Prioritätswert PR eindeutig zugeordnet. Die Programmodule PM mit der höchsten Priorität gehören der ersten Kategorie KAT1 an und sind für zeitkritische Aufgaben vorgesehen. Die Programmcdule PM der niedrigsten Priorität zählen zu der dritten Kategorie KAT3 und betreffen im wesentlichen Verwaltungs- und Testaufgaben. Die Programmodule der zweiten Kategorie KAT2 liegen zwischen den Programmodulen der ersten Kategorie und der dritten Kategorie. Die Programmodule der zweiten Kategorie KAT2 sind zur Bearbeitung von Anreizen vorgesehen die von Endgeräten ausgelöst wurden und deren Bearbeitung zeitverteilbar ist. Das Programmodul mit der höchsten Priorität in der zweiten Kategorie KAT2 ist das Anreizsicherungsprogrammodul AN, und das Programmodul mit der geringsten Priorität in der zweiten Kategorie ist das Arbitrierungsprogrammodul AR. Die angegeben Prioritätswerte PR der jeweiligen Programmodule werden mit höherer Priorität der Programmodule geringer.

Mit den Figuren 6 a bis 6 d sollen vier wesentliche Phasen bei der Abarbeitung von eingetroffenen Anreizen verdeutlicht werden. In den Figuren ist jeweils in schematischer Blockdarstellung des Multitasking-Betriebssystem BS mit seinem Kommunikationssubsystem KOMS und seinen Zuteilungssubsystem ZUS dargestellt. Weiterhin ist die Prozeßliste PL, der Systemprozessor SYPR und das dem Systemprozessor SYPR momentan zugeteilte im Systemspeicher SSP liegende Programmodul dargestellt. Des weiteren sind symbolisch wenigstens vier Endgeräte EG, zugehörige Meldespeicher MS und die den Endgeräten individuell zugeordneten Anreiz- und Informationsausgabespeicher AZS, INFAS symbolisch angedeutet.

In Figur 6 a soll anhand eines vereinfachten Beispieles der Fall dargestellt werden, der bei eintreffen eines Anreizes vorliegt. Bei diesem Ausführungsbeispiel wurde davon ausgegangen, daß sämtliche Anreize in Meldespeichern MS hinterlegt werden, also als indirekte Anreize zu verstehen sind. Ca die Endgeräte im vorliegenden Beispiel maximal alle 60 Millisekunden einen Anreiz absenden können, wird dem Betriebssystem alle 60 Millisekunden ein Anreiz zugeführt, der als direkter Anreiz in Form eines Zeittakt- Anreizes es die Aufmerksamkeit des Betriebssystems auf eventuelle eingetroffene indirekte Anreize im Meldespeicher MS richten soll. Wie in der Figur angedeutet wird vom Zuteilungssubsystem ZUS dasjenige Programmodul PM im Systemspeicher SSP dem Systemprozessor SYPR zugeteilt, daß in der Prozeßliste PL das Programmmodul mit der höchsten Priorität ist. Im gezeigten Beispiel ist der Name des momentan laufenden Programmodules OS, sein Prioritätswert ist 1 und die Adresse AD dieses Programmodules im Systemspeicher SSP findet sich als weiterer Eintrag in der Prozeßliste PL.

Beim Eintreffen des Zeittakt-Anreizes veranlaßt das Kommunikationssubsystem KOMS einen Vermerk in der Prozeßliste PL mit dem das Anreizsicherungsprogrammodul AN vermerkt wird. Der Prioritätswert PR des Anreizsicherungsprogrammodules AN ist z. B. 21. Sämtliche in der Prozeßliste als ablaufbereit vermerkten Programmodule, deren Priorität größer ist als die des Anreizsicherungsprogrammodules AN müssen abgearbeitet worden sein bevor das Anreizsicherungsprogrammodul AN laufend werden kann.

Die Figur 6 b zeigt die Phase, in der das Anreizsicherungsprogrammodul AN laufend ist, also dem Systemprozessor SYPR zugeteilt ist. Bei der Abarbeitung des Anreizsicherungsprogrammodules AN werden aus den Meldespeichern MS die dort von den Endgeräten EG hinterlegten Anreize x,y ausgelesen und jeweils in einen, dem sendenden Endgerät EG des jeweiligen Anreizes individuell zugeordneten Anreizspeicher AZS eingetragen. Die Anreizspeicher AZS sind als mehrstufige first-in-first-out-Speicher ausgebildet.

Die Meldespeicher MS werden bei der Entnahme der Anreize geleert, und bevor das Anreizsicherungsprogrammodul AN sich beendet, wird ein interner Anreiz ANIN, mit dem das Arbitrierungsprogrammodul AR bezeichnet wird, an das Betriebssystem abgegeben. Das Kommunikationssubsystem KOMS trägt daraufhin das Arbitrierungsprogrammodul AR in der Prozeßliste PL als ablaufbereit ein.

An dieser Stelle sei noch vermerkt, daß das Anreizsicherungsprogrammodul AN aus sämtlichen Informationsausgabespeichern INFAS, sofern dort Informationen hinterlegt sind, jeweils genau eine Teilinformation, z. B. ein 8 Bit-Wort entnimmt und an das als jeweiliger Empfänger bestimmte Endgerät EG übermittelt. Zu den Endgeräten kann, bedingt durch die Übertragungsstrecke, höchstens alle 60 Millisekunden ein 8 Bit-Wort übertragen werden.

In Figur 6 c ist die Phase dargestellt in die das Arbitrierungsprogrammodul AR laufend wird, also in der Prozeßliste PL kein Programmodul mit einer höheren Priorität vermerkt ist. Das Arbitrierungsprogrammodul AR untersucht nacheinander in einer festgelegten Reihenfolge die Anreizspeicher AZS nach Vermerken. Sobald das Anreizsicherungsprogrammodul AR einen Anreizspeicher AZS erkennt, der wenigstens einen Anreiz enthält, wird ein Anreiz entnommen, und ein interner Anreiz mit dem das gleiche Programmodul bezeichnet wird ausgelöst. Das Kommunikationssubsystem KOMS trägt daraufhin das bezeichnende Programmodul als ablaufbereit in der Prozeßliste PL ein. In der Figur ist der Name dieses Programmodules HD und es trägt den Prioritätswert 26.

Das Arbitrierungsprogrammodul AR bleibt solange in der Prozeßliste PL als ablaufbereit vermerkt bis es keinen Anreizspeicher AZS mehr findet in dem wenigstens ein Anreiz vermerkt ist.

Da durch den internen Anreiz ein Programmodul mit einer gegenüber dem Arbitrierungsprogrammodul AR höheren Priorität in der Prozeßliste PL eingetragen wurde, wird die Abarbeitung des Arbitrierungsprogrammodules AR sofort unterbrochen und das mit dem internen Anreiz bezeichnete Programmodul, z. B. HD, wird, sofern inzwischen kein höherpriorisiertes Programmodul ablaufbereit wird, dem Systemprozessor SYPR zugeteilt.

In Figur 6 d ist die Phase dargestellt in dem das durch einen Anreiz von einem Endgerät bezeichntete Programmodul letztendlich abgearbeitet wird. Im gezeigten Beispiel hat dieses Programmodul den Prioritätswert 26 und den Namen HD. Diese Programmodul kann dazu vorgesehen sein, um eine Information z. B. die Uhrzeit an dem Display eines Endgerätes anzuzeigen. Diese Information wird vom laufenden Programmodul zuerst in einen dem als Empfänger vorgesehen Endgerät zugeordnteten Informationsausgabespeicher INFAS eingetragen, um dann später wie im Zusammenhang mit Figur 6 b bereits erläutert vom Anreizsicherungsprogrammodul AR an das Endgerät EG übertragen zu werden.

Ist die Abarbeitung dieses Programmmodules abgeschlossen, so wird der entsprechende Vermerk in der Prozeßliste PL gelöscht. Damit könnte wiederum das Arbitrierungsprogrammodul AR laufend werden, das dann einen zu einem anderen Endgerät gehörenden Anreizspeicher AZS ausliest und aus diesem einen Anreiz entnimmt, um ihn in Form eines internen Anreizes an das Betriebssystem weiterzureichen.

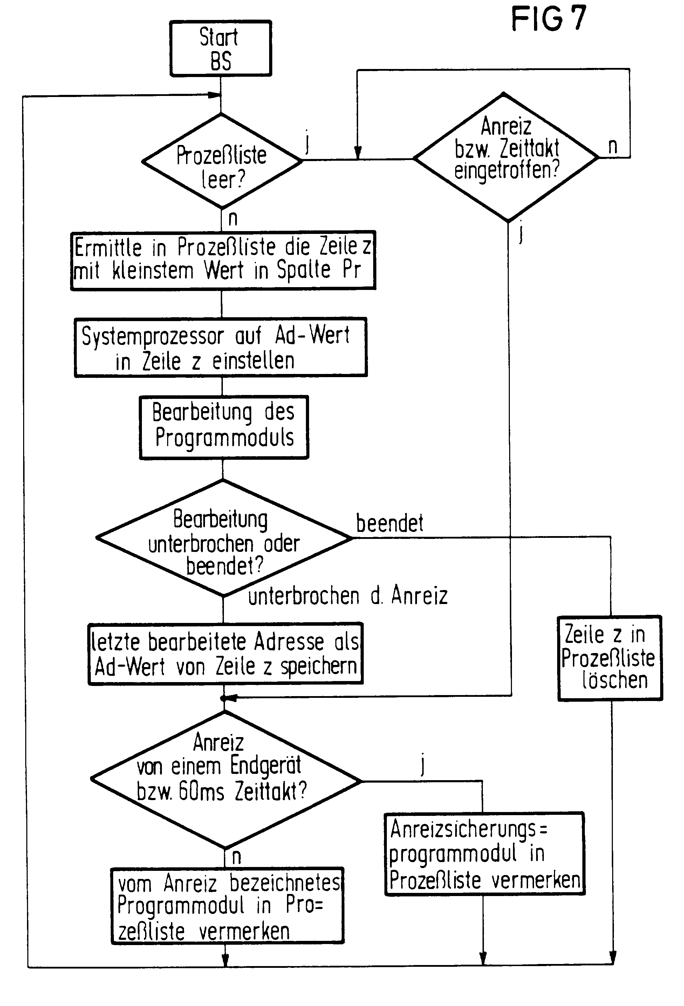

In Figur 7 ist ein Ablaufdiagramm dargestellt, anhand dessen sich die wesentlichen programmtechnischen Schritte, inbesondere die der Rechnerkernzuteilungssequenz im Betriebssystem nachvollziehen lassen.

Sofern die Prozeßliste nicht leer ist wird die Zeile Z in der Prozeßliste ermittelt deren zugehörige Spalte PR für den Prioritätswert den kleinsten Wert aufweist. Daraufhin wird der Systemprozessor auf die Adresse des betreffenden Programmodules im Systemspeicher SSP eingestellt. Diese Adresse kann z. B. in der Spalte AD der Prozeßliste PL hinterlegt werden. Danach erfolgt die Bearbeitung des ermittelten Programmodules.

Die Bearbeitung dieses Frogrammodules kann beendet werden oder unterbrochen werden. Ist die Bearbeitung beendet, wird in der Prozeßliste PL der diesem Programmodul zugehörige Vermerk, d. h. im vorliegenden Beispiel die Zeile Z gelöscht und die Zuteilungssequenz von neuem durchlaufen. Ist die Bearbeitung unterbrochen worden, so wird die letzte bearbeitete Adresse des Programmodules gespeichert, um für eine Fortsetzung des Programmodules die jeweilige relevante Adresse zur Verfügung zu haben. Die Speicherung der letzten bearbeiteten Adresse kann z. B. in der Spalte des Adresswertes AD in der Prozeßliste PL erfolgen.

Eine Unterbrechung kann durch einen direkten Anreizen von einem Endgerät, dem 60 Millisekunden Zeittakt oder durch irgend eine andere eintreffende Information in Form eines Anreizes ausgelöst worden sein.

Stammt der eingetroffene Anreiz von einem Endgerät oder vom 60 Millisekunden Zeittakt so wird das Anreizsicherungsprogrammodul AN in der Prozeßliste als ablaufbereit vermerkt. Bei allen anderen Anreizen also auch internen Anreizen wird das von dem Anreiz bezeichnete Programmodul in der Prozeßliste vermerkt. Danach wird die Zuteilungssequenz von neuem durchlaufen.

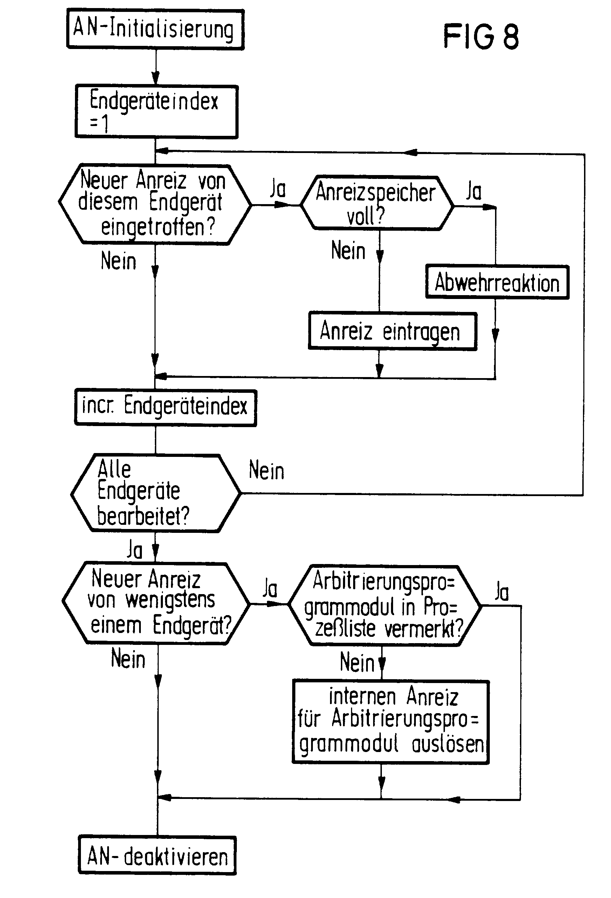

In Figur 8 ist ein Ablaufdiagramm dargestellt, anhand dessen sich die wesentlichen programmtechnischen Schritte im Anreizsicherungsprogrammodul nachvollziehen lassen.

Zunächst wird ein Endgeräteindex auf 1 voreingestellt. Danach wird der diesem durch den Endgeräteindex bezeichneten Endgerät zugeordnete Meldespeicher MS abgefragt und im Falle eines eingetroffenen Anreizes der zugehörige Anreizspeicher hinsichtlich seines Füllstandes überprüft. Ist der Anreizspeicher voll, so wird ein Abwehrreaktion eingeleitet auf die hier nicht weiter eingegangen werden soll, ist der Anreizspeicher noch nicht voll, wird der Anreiz eingetragen.

Anschließend wird der Endgeräteindex inkrementiert d. h. um eins erhöht, und es wird untersucht, ob bereits alle Meldespeicher der Endgeräte abgefragt wurden. Ist dies nicht der Fall so wird der dem momentanen gültigen Endgeräteindex zugehörige Meldespeicher abgefragt und in analoger Weise ein Anreiz im Anreizspeicher eingetragen.

Ist sichergestellt, daß alle Endgeräte bzw. deren Meldespeicher abgefragt wurden, so wird für den Fall, daß wenigstens von einem Endgerät ein Anreiz eingetroffen ist untersucht, ob das Arbitrierungsprogrammodul noch in der Prozeßliste PL als ablaufbereit vermerkt ist. Ist dies nicht der Fall, so wird ein interner Anreiz, der das Arbitrierungsprogrammodul bezeichnet ausgelöst, andernfalls deaktiviert sich das Anreizsicherungsprogrammodul.

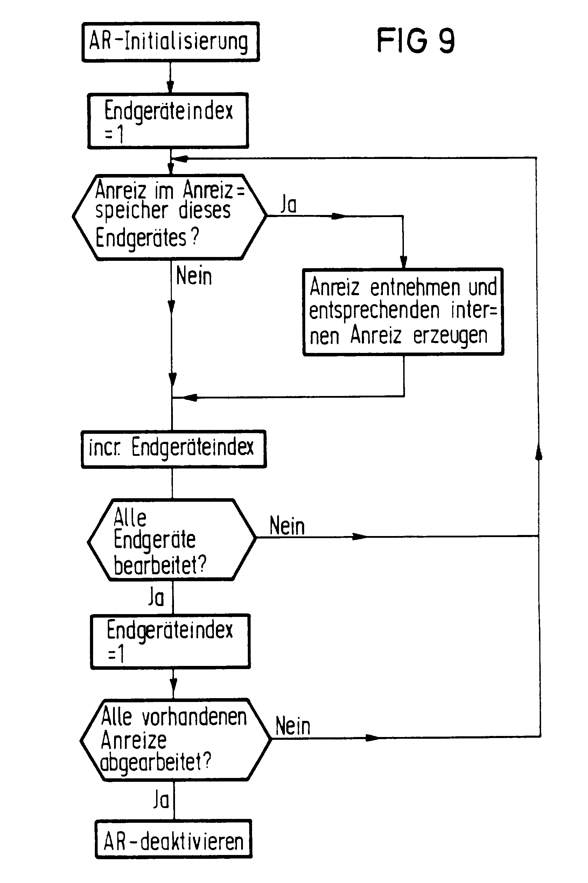

In Figur 9 ist ein Ablaufdiagramm dargestellt mit dem sich die wesentlichen programmtechnischen Schritte im Arbitrierungsprogrammodul nachvollziehen lassen.

Ausgehend von einer Voreinstellung eines Endgeräteindex auf 1, wird in dem, durch den Endgeräteindex bezeichneten Endgerät individuell zugeordnteten Anreizspeicher nachgesehen, ob wenigstens ein Anreiz vorhanden ist. Ist dies der Fall, so wird dieser Anreiz entnommen und ein dasselbe Programmodul bezeichnender interner Anreiz erzeugt. Anschließend wird der Endgeräteindex inkrementiert und geprüft, ob alle Anreizspeicher nacheinander abgefragt wurden. Ist dies nicht der Fall so wird in analoger Weise wie beim Endgeräteindex 1 verfahren.

Da in einem Anreizspeicher auch mehrere Anreize vermerkt sein können, und bei einer Anfrage nur genau ein Anreiz entnommen wird, werden anschließend sämtliche Anreizspeicher noch einmal abgefragt und bei Vorhandensein eines Anreizes wiederum ein Anreiz entnommen. Erst wenn in keinem Anreizspeicher ein Anreiz mehr enthalten ist, deaktiviert sich das Arbitrierungsprogrammmodul selbst.

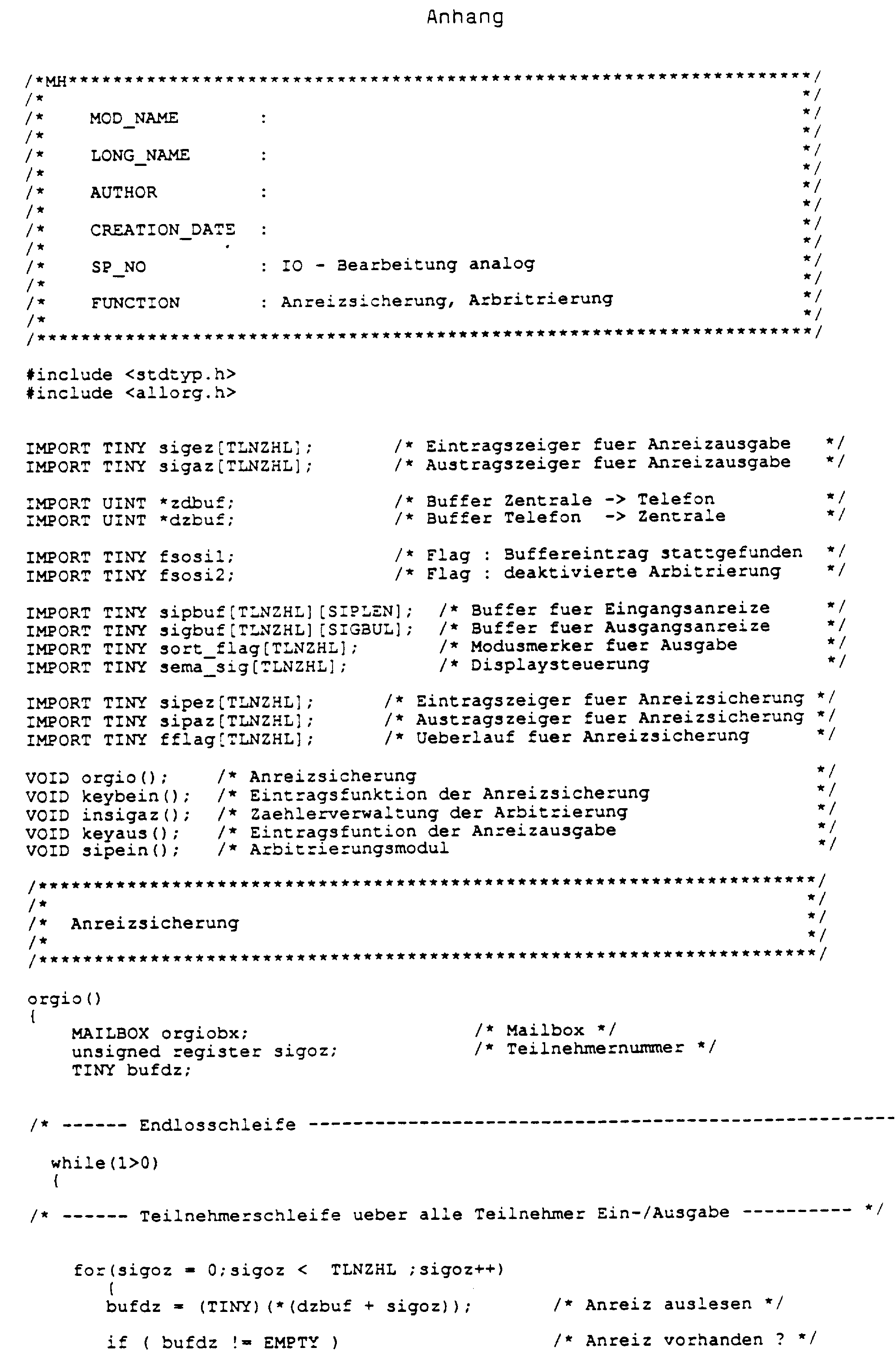

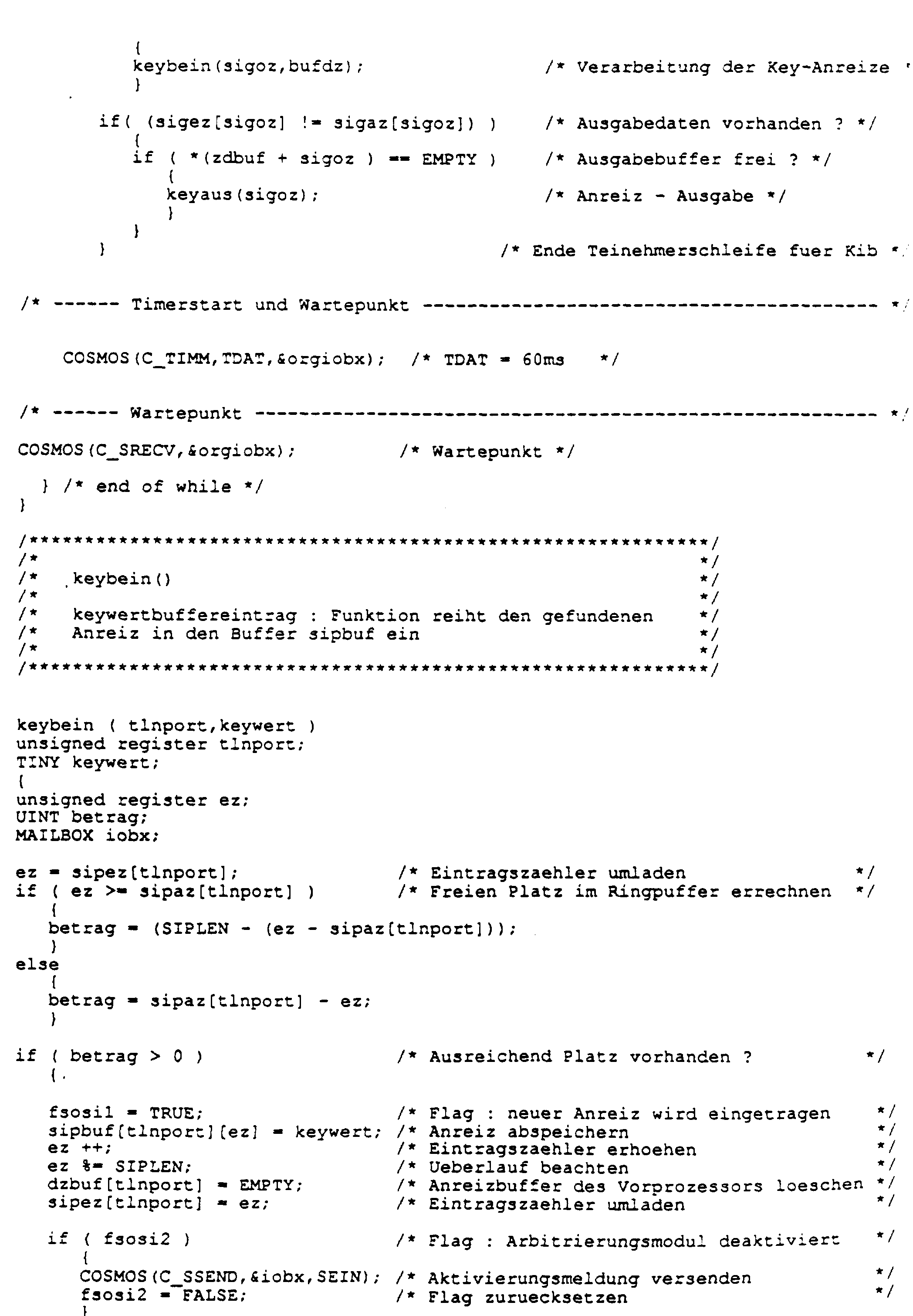

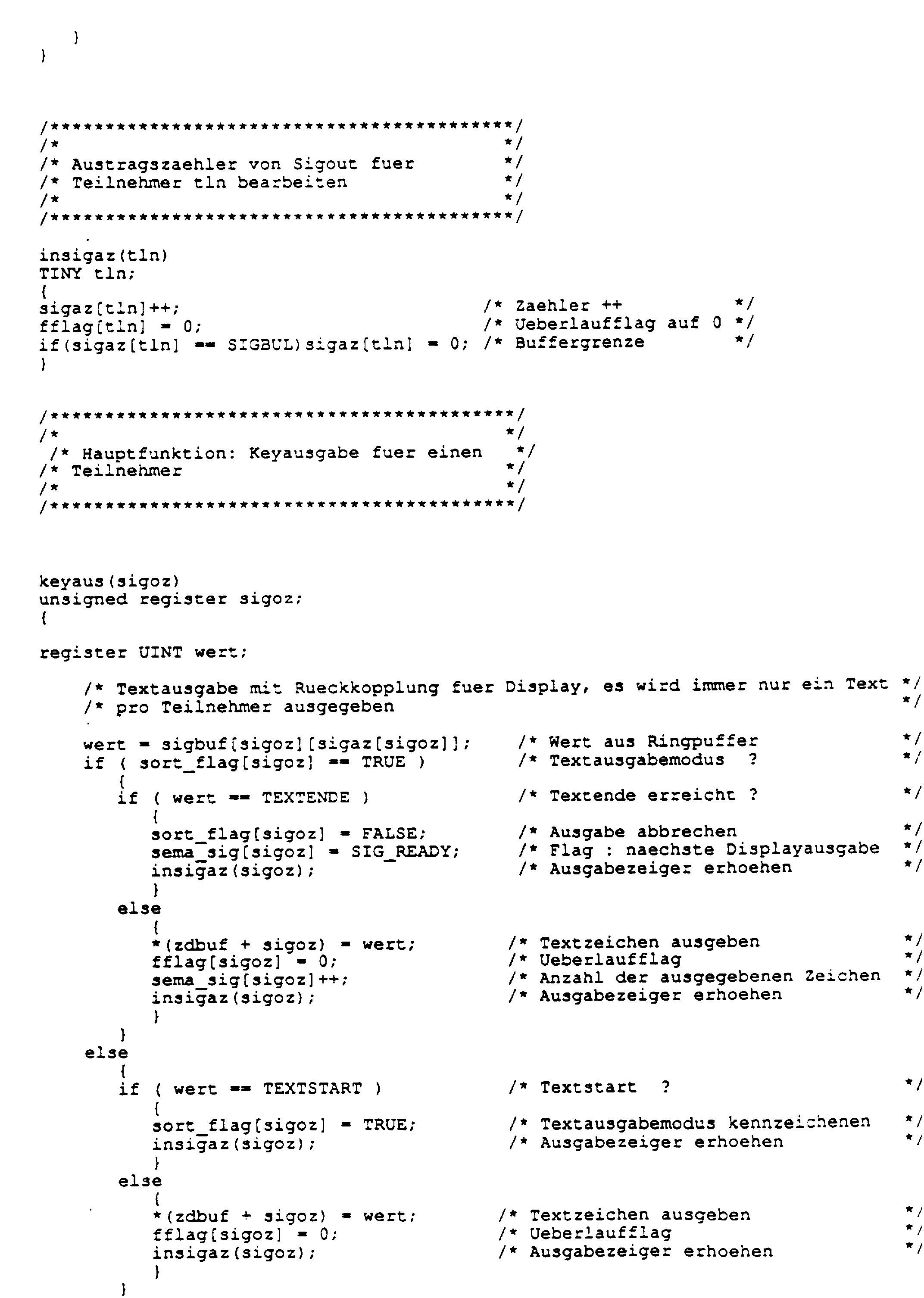

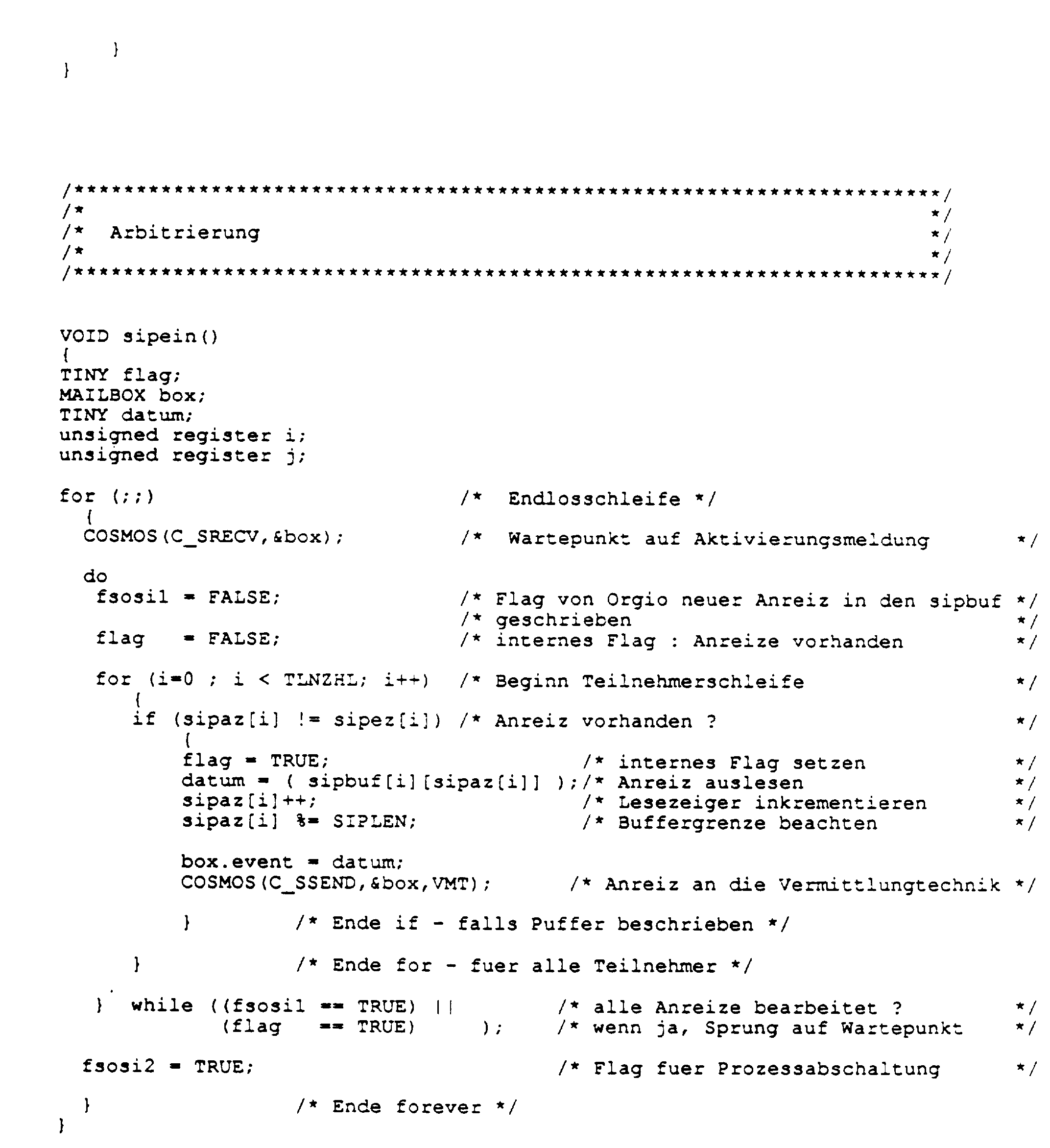

## Patentansprüche

1. Programmgesteuerte Kommunikationsanlage bzw. Vermittlungseinrichtung zur wahlweisen Verbindung von Kommunikationsendgeräten untereinander
- mit wenigstens einer Leitungseinheit zur signalisierungsartspezifischen Anschaltung von Kommunikationsendgeräten und Netzen, die im Rahmen einer Verbindungssignalisierung Anreize übermitteln,
- mit einem Koppelnetz zum Durchschalten von Verbindungswegen
- sowie mit einem zur zentralen Steuerung der Kommunikationsanlage dienenden programmierbaren digitalen Rechensystem,
-- für das in Zuordnung zu eingetroffenen oder intern ausgelösten Anreizen jeweilige Verarbeitungsvorschriften vorgesehen sind, die in Form von durch die Anreize bezeichenbaren Programmodulen hinterlegt sind,
-- das einen Systemspeicher zur Speicherung
--- der Programmodule und
--- von Daten aufweist,
-- und das wenigstens einen Systemprozessor aufweist, dem unter Steuerung eines Multitasking-Betriebssystems die Programmodule zur Ausführung zugewiesen werden, wobei das Multitasking-Betriebssystem
--- ein Kommunikations-Subsystem aufweist, das bei intern ausgelösten Anreizen das von dem betreffenden Anreiz bezeichnete Programmodul in einer Prozeßliste als ablaufbereit vermerkt,
--- und ein Zuteilungssubsystem aufweist, welches in Abhängigkeit von den Programmodulen individuell zugeordneten Prioritätswerten aus der Prozeßliste jeweils ein Programmodul auswählt und dem Systemprozessor zur Ausführung zuweist,
**dadurch gekennzeichnet**,
daß das Kommunikationssubsystem (KOMS) bei eingetroffenen Anreizen (ANR) ein Anreizsicherungsprogrammodul (AN) hoher Priorität als ablaufbereit vermerkt,
daß das Anreizsicherungsprogrammodul (AN) die eingetroffenen Anreize jeweils in einem, der Quelle eines jeweiligen Anreizes individuell zugeordneten Anreizspeicher (AZS) vermerkt, daß vom Anreizsicherungsprogrammodul (AN) ein interner Anreiz auslösbar ist, der ein Arbitrierungsprogrammodul (AR) niedriger Priorität bezeichnet, und daß das Arbitrierungsprogrammodul (AR) die Anreizspeicher (AZS) nacheinander ausliest und jeweils beim Auffinden eines wenigstens einen Anreiz beinhaltenden Anreizspeichers (AZS) aus diesem einen Anreiz entnimmt und für das von diesem Anreiz bezeichnete Programmodul, dessen Priorität zwischen der des Anreizsicherungsprogrammodules (AN) und der des Arbitrierungsprogrammodules (AR) angeordnet ist, einen internen Anreiz auslöst.

2. Programmgesteuerte Kommunikationsanlage nach Anspruch 1, **dadurch gekennzeichnet**,
daß eine, von einem durch einen eingetroffenen Anreiz bezeichneten Programmmodul gebildete Ausgabeinformation in jeweiligen, den Empfängern der Ausgabeinformation individuell zugeordneten Informationsausgabespeichern (INFAS) hinterlegt wird und daß das Anreizsicherungsprogrammodul (AR) die Informationsausgabespeicher (INFAS) nacheinander ausliest und unter Berücksichtigung einer maximal möglichen Übertragungsgeschwindigkeit an die Empfänger daraus jeweils eine Teilinformation an die betreffenden Empfänger weiterleitet.

3. Programmgesteuerte Kommunikationsanlage nach Anspruch 1 oder 2, **dadurch gekennzeichnet,**
daß in zeitlichen Abständen periodisch eintreffende Anreize vorgesehen sind, die jeweils das Anreizsicherungsprogrammodul (AN) bezeichnen, und daß das Anreizsicherungsprogrammodul die eingetroffenen Anreize aus einem zur Zwischenspeicherung dienenden Meldespeicher (MS) entnimmt.

4. Programmgesteuerte Kommunikationsanlage nach Anspruch 2 und 3, **dadurch gekennzeichnet**,
daß die zeitlichen Abstände des periodisch eintreffenden Anreizes so bemessen sind, daß die maximal mögliche Übertragungsgeschwindigkeit für Ausgabeinformationen erreichbar ist.

5. Programmgesteuerte Kommunikationsanlage nach Anspruch 1 oder 2, **dadurch gekennzeichnet**,
daß die Anreiz- und/oder Informationsausgabespeicher jeweils als Ringspeicher ausgebildet sind.

## Claims

1. Program-controlled communications installation or switching equipment for the optional interconnection of communications terminals
- having at least one line unit for the connection, which is specific to the type of signalling, of communications terminals and networks which communicate events in the context of call signalling,
- having a switching network for switching through connection paths
- and also having a programmable digital computing system which is used for the central control of the communications installation,
-- for which computing system respective processing prescriptions are provided, assigned to events which have arrived or have been triggered internally, and are stored in the form of program modules which can be designated by the events,
-- which computing system has a system memory for storing
--- the program modules and
--- data,
-- and which computing system has at least one system processor, to which the program modules are allocated for execution under the control of a multitasking operating system, the multitasking operating system
--- having a communications subsystem which, in the case of internally triggered events, records as ready for execution, in a process list, the program module which is designated by the relevant event,
--- and having an allocation subsystem which selects a respective program module from the process list, as a function of priority values individually assigned to the program modules, and allocates it to the system processor for execution,
characterized in that, in the case of events (ANR) which have arrived, the communications subsystem (KOMS) records a high-priority event protection program module (AN) as ready for execution, in that the event protection program module (AN) records each of the events which have arrived in an event memory (AZS) which is individually assigned to the source of a respective event, in that the event protection program module (AN) can trigger an internal event which designates a low-priority arbitration program module (AR), and in that the arbitration program module (AR) successively reads out the event memories (AZS) and, each time it finds an event memory (AZS) which contains at least one event, it removes an event from the said memory and triggers an internal event for the program module which is designated by this event and the priority of which is arranged between that of the event protection program module (AN) and that of the arbitration program module (AR).

2. Program-controlled communications installation according to Claim 1, characterized in that an output information item, which is formed by a program module designated by an event which has arrived, is stored in respective information output memories (INFAS) which are individually assigned to the receivers of the output information, and in that the event protection program module (AR) successively reads out the information output memories (INFAS) and, taking account of a maximum possible transmission speed to the receivers, from this forwards a respective partial information item to the relevant receivers.

3. Program-controlled communications installation according to Claim 1 or 2, characterized in that events arriving periodically in time intervals are provided, which events designate the respective event protection program module (AN), and in that the event protection program module removes the events which have arrived from an indication store (MS) used for buffering.

4. Program-controlled communications installation according to Claim 2 and 3, characterized in that the time intervals of the periodically arriving events are dimensioned in such a way that it is possible to achieve the maximum possible transmission speed for output information items.

5. Program-controlled communications installation according to Claim 1 or 2, characterized in that the event and/or information output memories are each designed as ring memories.

## Revendications

1. Installation de communication ou dispositif de commutation à commande par programme pour la liaison sélective de terminaux de communication entre eux, comportant
- au moins une unité de ligne pour le raccordement, spécifique en fonction du type de signalisation, de terminaux de communication et de réseaux, qui retransmettent des incitations dans le cadre d'une signalisation de liaison,
- un réseau de couplage pour l'interconnexion de voies de liaison,
- ainsi qu'un système de calcul numérique programmable utilisé pour la commande centrale de l'installation de communication,
-- pour lequel sont prévues, en association avec des incitations arrivantes ou déclenchées de façon interne, des prescriptions respectives de traitement, qui sont mémorisées sous la forme de modules de programme pouvant être désignés par les incitations,
-- et qui comportent une mémoire système pour la mémorisation
--- des modules de programmes et
--- de données,
-- et qui comportent au moins un processeur système, auquel les modules de programmes sont affectés pour l'exécution, sous la commande d'un système d'exploitation multitâches, le système d'exploitation multitâches comportant
--- un sous-système de communication, qui dans le cas d'incitations déclenchées de façon interne, marque dans une liste de processus, le module de programme désigné par l'incitation considérée, comme étant prêt à être exécuté, et
--- et un sous-système d'affectation, qui, en fonction de valeurs de priorité associées individuellement aux modules de programme, sélectionne respectivement un module de programme à partir de la liste de processus et l'affecte au processeur système pour l'exécution,
caractérisée par le fait
que le sous-système de communication (KOMS) marque un module de programme (AN) de sécurité des incitations de priorité supérieure comme prêt pour l'exécution, dans le cas de l'arrivée d'incitations (ANR),
le module (AN) de programme de protection des incitations marque les incitations arrivantes respectivement dans une mémoire d'incitations (AZS), qui est associée individuellement à la source d'une incitation respective, que le module (AN) du programme de protection des incitations peut déclencher une incitation interne, qui désigne un module de programme d'arbitrage (AR) possédant une faible priorité, que le module de programme d'arbitrage (AR) lit successivement les mémoires d'incitations (AZS) et, respectivement lors de la découverte d'une mémoire d'incitations (AZS), qui contient au moins une incitation, prélève une incitation de cette mémoire et déclenche une incitation interne pour le module de programme désigné par cette incitation et dont la priorité se situe entre celle du module (AN) de programme de protection des incitations et celui du module de programme d'arbitrage (AR).

2. Installation de communication commandée par programme suivant la revendication 1, caractérisée par le fait qu'une information de sortie, formée par un module de programme désigné par une incitation arrivée, est mémorisée dans des mémoires respectives de sortie d'informations (INFAS), associées individuellement aux récepteurs de l'information de sortie, et que le module (AR) de programme de protection des incitations lit successivement les mémoires de sortie de l'information (INFAS) et, en tenant compte d'une vitesse de transmission maximale possible dans les récepteurs, retransmet, à partir de là, respectivement une information partielle au récepteur concerné.

3. Installation de communication commandée par programme suivant la revendication 1 ou 2, caractérisée par le fait qu'il est prévu des incitations, qui arrivent périodiquement pendant des intervalles de temps et qui désignent respectivement le module (AN) de programme de protection des incitations et que le module de programme de protection des incitations prélève les incitations arrivantes d'une mémoire de signalisations (MS) utilisée pour la mémorisation intermédiaire.

4. Installation de communication commandée par programme suivant les revendications 2 et 3, caractérisée par le fait que les intervalles de temps de l'incitation arrivant périodiquement sont dimensionnés de telle sorte que l'on peut obtenir la vitesse de transmission maximale possible pour des informations de sortie.

5. Installation de communication commandée par programme suivant la revendication 1 ou 2, caractérisée par le fait que les mémoires de sortie d'incitations et/ou d'informations sont agencées respectivement sous la forme de mémoires en anneau.
